Europäisches Patentamt

European Patent Office

Office européen des brevets

(11) Publication number: **0 494 364 A2**

# EUROPEAN PATENT APPLICATION

(21) Application number: **91119645.9**

(22) Date of filing: **18.11.91**

(51) Int. Cl.5: **G06F 15/40**

(30) Priority: **08.01.91 US 638821**

(43) Date of publication of application:
**15.07.92 Bulletin 92/29**

(84) Designated Contracting States:
**AT BE CH DE DK ES FR GB GR IT LI LU NL SE**

(71) Applicant: **VOLT INFORMATION SCIENCES, INC.**
**101 Park Avenue**
**New York, New York 10178(US)**

(72) Inventor: **Scott, Dwight E.**
**8415 San Capistrano Way**
**Buena Park California 90620(US)**

(74) Representative: **Altenburg, Udo, Dipl.-Phys. et al**
**Patent- und Rechtsanwälte**
**Bardehle-Pagenberg-Dost-Altenburg**
**Frohwitter-Geissler & Partner Postfach 86 06 20**
**W-8000 München 86(DE)**

(54) Method and apparatus for information storage and retrieval.

(57) An information storage and retrieval system and technique are provided in a computer system for use in combination with relational data base management system technology. Such combination yields a system that is capable of achieving sub-second response times when servicing retrieval requests. An interface software module provides front end processing that builds a data base which comprises a plurality of information referred to as records in some intelligible form along with a plurality of retrieval files which are utilized in the retrieval process. The rows of a second one of the retrieval files comprise an arbitrary length bit string in which there is a one-to-one relationship between the bit position in the bit string to the position of a record relative to the first record of a record set. This relationship is utilized to service a search query from a requestor which can be either a user or another process in the computer system. Upon receiving the requestor's query, the interface software performs a series of steps utilizing the plurality of retrieval files to identify and retrieve records from the relational data base management system that satisfy the requestor's query.

10

FIG. 1

## FIELD OF THE INVENTION

The invention relates to an information storage and retrieval system, and, more particularly, to a computerized information storage and retrieval system that combines an improved storage and retrieval technique with relational data base technology.

## APPENDIX

A Microfiche Appendix is attached hereto and is part of the disclosure hereof. The Microfiche Appendix of this patent document contains material which is subject to copyright. The copyright owner has no objection to the facsimile reproduction by anyone of the patent document or the patent disclosure, as it appears in the Patent and Trademark Office patent file or records, but otherwise reserves all copyright rights whatsoever.

## BACKGROUND OF THE INVENTION

The problem and art of retrieving and selecting particular desired records is an old one that dates back to early times when information bearing records began to be accumulated and stored in sets. Numerous manual and automated techniques have been devised to solve this problem. A technique which has revolutionized information storage and retrieval techniques is disclosed in U.S. Patent No. 4,276,597 which is assigned to the present assignee. This patent discloses a technique referred to as the "XM technique" or "XM" for performing information storage and retrieval.

Generally, XM is an indexing and data storage technique which provides for rapid retrieval of information. In one embodiment, XM combines bit map technology with data base indexing technology. Traditional data base indexing technology allows indexing of only the information in a data record whereas XM provides for the index to contain other information in addition to the information stored in a data record. XM also provides for record groups to be readily identified without the use of explicit pointers.

In XM, data about entities are stored and retrieved. These entities have attributes, e.g., a person has the attributes age, height, weight, sex, etc. The entity data are stored as records in a file.

Essentially, the XM technique utilizes a set of bit strings referred to as XMs to represent a mapping between an attribute and a set of entity data. The XMs are indices to data records. There are at least three ways of encoding attribute values in XM. One is to have a bit string for each possible value of the attribute. A second way is to have a bit string represent a range of attribute values. The third way is to have the bit strings represent the details of some semantic representation of the values. The relative position of a bit in a bit string defines a one-to-one mapping with the relative position of a data record in a well-defined sequentially ordered scheme. The value of the bit is determined by and reflects the presence or absence of the specific attribute value the bit string represents in the indicated entity.

While the XM technique is not confined to automated means, it has been primarily applied to computerized information storage and retrieval systems. In particular, the XM technique has been combined with traditional data base technology where data records are stored in a data base. There are two types of traditional data bases. One is a hierarchical data base and the other is a network data base. For both types of data bases, the application software or the user accessing the data base must know the structure of the data base to facilitate the retrieval of data records. That is, one must know the relationship of the indices to the data records as well as how the records are configured.

There are a number of shortcomings in the above-described XM technique in combination with traditional data base technology. Due to the relative rigidity of the structure of the XM technique, it is difficult to extend the data base to add new types of data items and to update the data base in terms of adding or deleting records.

Adding new data items to the data base requires adding new indices as well as adding new fields to data records. This is a fairly complicated process with an XM data base. Adding new records to an XM database is also a fairly complicated process for two reasons. Since XM maintains one bit for every data record in the data base, the process could involve updating more than one million bits depending on the number of records in the data base. Also, in certain cases, XM combines multiple records to enable a user to access all related records. To modify one or all related records in such multiple record configuration requires the rebuilding of the multiple records.

The above-mentioned drawbacks have been virtually eliminated by the introduction of relational data base technology. A relational data base is a data base that comprises a series of tables called relations. The relations comprise rows (which correspond to records in traditional data bases) and columns (which correspond to fields in traditional data bases). Each column contains a single data item. The relations are associated with one another according to the field values in the relation. The structure of a relational data base is independent of the software or person that is accessing it. By its nature, a relational data base simplifies the tasks of adding new data types to an existing data base and updating an existing data base.

While relational data base technology provides high reliability and data integrity, the performance of such data base technology suffers as it grows in complexity. When building a complex relational data base, a large number of tables are generated to provide access to the data records. As a result, the response time, i.e., the time from when a requestor enters a query to the time when the requested information is returned to the requestor, is relatively slow. Thus, a relational data base may not be suitable for all applications.

While the prior art provides adequate means for information storage and retrieval, there is a heed for advancement. In particular, there is a need to combine the flexibility and ease of use of relational data base technology with the speed enhancing capabilities of the XM technique to achieve sub-second response times and still maintain the advantages and flexibility of relational data base technology.

## SUMMARY OF THE INVENTION

Accordingly, the present invention provides a method and apparatus for information storage and retrieval that combines a storage and retrieval technique based upon XM principles with relational data base technology. Such combination yields a system that is capable of achieving sub-second response times when servicing retrieval requests.

Generally, the operating environment of the present invention includes a general purpose computer system which comprises a computer with associated peripheral equipment such as disk drives, tape drives and video display terminals. A relational database management system ("RDBMS") is maintained on the disk drive or some other storage medium in the computer system. Interface software which provides a front end interface between a requestor, i.e., a user or another process in the computer system, and the RDBMS is also maintained on the disk drive or some other storage medium. The interface software module integrates the storage and retrieval technique of the present invention with RDBMS features.

Pursuant to a feature of the present invention, a data base is created and stored in the RDBMS. The data base comprises a plurality of information bearing records in some intelligible form along with at least one index retrieval file which is utilized in the retrieval process. The records are in the form of a logical entity that represent values of attributes of an object in the real world. The records supplied are grouped into predetermined sets. Typically, the records can be supplied to the computer system by downloading the information from magnetic tape, by communications with another computer system or by user input to a keyboard of the video display terminal.

The records are then individually processed to ascertain the values of preselected attributes of the records. Through this processing a preprocessing file can be constructed of a plurality of binary elements, e.g., bit strings, wherein the entries in each row represent the presence or absence of specific attribute values for a particular record. The columns of the array represent the specific attribute values. If the record being processed is related to other records already stored in the preprocessing file, then these related records are processed to update the record's bit string to add the additional attributes and reflect the presence or absence of the specified attribute values.

The preprocessing file is then subjected to further processing to construct an index retrieval file. The index retrieval-file comprises a plurality of bit strings which can be arranged to form an array. The index retrieval file contains entries that represent a conversion of the values in the preprocessing file. The rows of the array in the index retrieval file each comprise an arbitrary length binary element, e.g., bit string, in which there is a one-to-one relationship between the bit position in the bit string to the position of the particular record relative and the first record of a record set. The value of the bits in the bit string reflect the presence or absence of the specific attribute value. There is one row in the array for each attribute value in the index retrieval file. The columns in the array are representative of each record.

A record retrieval file may be created to be the repository of data to be retrieved in response to data base queries. In some data base applications it is possible for a single physical file to play the roles of both the index retrieval file and the record retrieval file.

Once the retrieval files are constructed they are stored in the data base. The data base is now ready to accept and process retrieval requests.

Pursuant to another feature of the present invention, a requestor which can be either a user or another process running on the computer system can issue a query to request and receive information from the newly created data base stored in the RDBMS. The query issued by the requestor is received and processed by the interface software before being passed on to the RDBMS. The format of the query may comply with the ANSI standard, SQL format or any other data base format.

Upon receiving the requestor's query, the interface software performs a series of steps to identify and retrieve records that satisfy the requestor's query. The first step performed is to identify all candidate record sets that may contain data that satisfy the query. This step may be trivial if there is only one record set in the data base. Next, the attribute values that are included in the requestor's query are formatted into a second query which is passed from the interface software to the RDBMS. The second query is directed to retrieve entries from the index retrieval file that relate to the attribute values specified in the requestor's query.

The number of entries returned by the RDBMS to the interface software will depend upon the number of attribute values specified. The entries returned represent the rows in the array of the index retrieval file for each specific attribute value requested by the requestor's query.

Through a series of filtration steps, the entries received are combined through the use of boolean logic functions to create a single entry. This single entry is a bit string wherein each bit corresponds by a one-to-one relationship with a record number for the current record set. The bits that are set in this entry represent records that contain attribute values that satisfy the requestor's query.

The entry is then further processed to identify the specific record numbers of the desired records of the record set. A third query is formulated to retrieve the specific records from either the index or record retrieval file in the RDBMS. Once the records are retrieved from the RDBMS by the interface program, the records are passed to the requestor.

**BRIEF DESCRIPTION OF THE DRAWINGS**

Fig. 1 is a block diagram of an exemplary embodiment of apparatus for practicing the invention.

Fig. 2 is an action diagram that illustrates the process for adding new data elements to a relational data base using XMs.

Fig. 3 is an action diagram that illustrates the process which creates a column that represents the given Attribute Value pair for all records in the MX table.

Fig. 4 is an action diagram that illustrates the process of converting an MX table into individual Attribute Value XMs.

Fig. 5 is an action diagram that illustrates the process of retrieving data records from a relational data base including XM indices.

Figs. 6A-6C illustrate an example of storing and retrieving data in a relational data base using the technique of the present invention.

Figs. 7A-7D illustrate a second example of storing and retrieving data from a relational data base containing information wherein the hierarchical structure of data is embodied in the XM indices.

**DETAILED DESCRIPTION**

For a complete understanding of the present invention, a brief discussion of terminology and definitions is set forth below. The terms are initially defined out of context but will be useful to understand the description of the present invention that follows. The terms defined represent the basic structures utilized in the present invention which were derived from U.S. Patent No. 4,276,597 which is assigned to the present assignee and is expressly incorporated herein by reference.

The first term to be defined is a "record". A "record" is a logical entity containing information that represents attribute values of an object in the real world that possesses certain attributes. The information may be physically stored in a data base as a single retrievable unit or broken down into multiple entities which are joined together to contain all of the stored attribute values for a specific object.

The records can be grouped into "record sets". A "record set" is a number of records that are associated with each other through some relationship. The relationship need not be explicit in the data base, but each record set must be explicitly identified in the data base, for example, all rows of a specified table or all rows with a common attribute value or in a range of attribute values.

There must be a "record order", i.e., an explicit sequence, to the records in a record set even though the sequence may be arbitrary. The order may be direct where the records are physically stored in the specified order or indirect where there is either a data item in the record which indicates the order or a table exists that contains record information which allows the records to be accessed in a defined order.

The term "file" as it is used in this application refers a collection of relational tables in a relational data base management system. These tables may be of a transient nature in that they exist for a limited time only in computer memory, or the tables may be stored in a more lasting form in a long term data storage medium such as a magnetic disk.

Two terms which relate to position of data in a data base are "relative record number" ("RRN") and "relative bit number" ("RBN"). The relative record number represents the ordinal position of any particular record relative to the first record of the record set. This number may either be explicit, i.e., contained in the record, or implicit, i.e., obtained by counting in order sequence. The relative bit number represents the ordinal position of any particular bit in an arbitrary length bit string relative to either the least significant or most significant bit of the bit string as specified in a particular implementation.

In a relational data base, columns represent attributes and the values are contained in the rows of each column. The set of attribute values for a record set are all the values represented in the record set for the set of attributes a data base designer has designated to be applicable to the record set.

An "MX" is a bit string wherein each bit represents the presence or absence of an attribute value that might apply to the record. An attribute value may be represented as a pair of descriptors wherein the first descriptor reflects an attribute type of the real world object represented in the data base and the second descriptor represents the value of that attribute for a specific object instance.

The MXs generated for a data base are grouped into preprocessing tables referred to as "MX tables" which comprise a preprocessing file. An MX table is a table structure comprising an array of binary elements in which each row of the array contains the MX for a record in the record set. The columns of the array are one bit wide. The bits of the array are either set or cleared to indicate the value for each attribute. There is one row for each record. The order of the records in the MX table is the relative record order of the record set.

The MX table is created as an intermediate step to creating "XMs". An XM is an arbitrary length bit string in which the relative bit number of each bit has a one-to-one relationship with the relative record number of a record in the related record set. The values of the bits represent the presence or absence of the specific attribute value associated with the XM. There is one XM for every attribute value associated with the records in the record set.

The XMs generated for a data base are grouped into one or more index tables referred to as "XM tables" which comprise one or more index retrieval files. An XM table is a relational table or array which includes the XMs for each attribute value. The columns of the XM table represent the attribute types, the XM and any other data that might be used to identify the record set membership of each row of the table or to join that XM table with another XM table. Each entry in the rows of the table represents the presence or absence of an attribute, the XM indicating which records in the record set are associated with that attribute value and other types of identifying information such as record set identifiers or other identifiers which can be used to associate the given attribute values and XMs with the record table. The columns of the XM table containing the XMs may be thought of as a binary array in which each row corresponds to an attribute value, and each column, i.e., each bit position, of the array corresponds to a specific record in the associated record set.

A "record table" is a logical table comprising an array of information where the data to be retrieved in response to data base queries are stored. Such table may either be a single or multiple tables which can be joined to create the entire logical record. Either the entire record or specified parts of the record may be required for any individual query. It is possible for a single physical table to be both the record table and the XM table as is shown in the examples below.

A resultant is a bit string which is created and used as a mask during the retrieval process. The length of the bit string is equal to the length of the XMs for the record set being considered at the time. It is initialized with all bits set to the value "on". As each XM is retrieved, a boolean AND or an OR operation is performed with the XM and the resultant. The product of such boolean operation then becomes the new resultant and is used for the next XM. Once all XMs have been retrieved and processed for the query, the resultant comprises a bit string in which each bit corresponds to a record in the record set and the value of a bit represents the presence or absence of the combination of all of the attribute values indicated in the query.

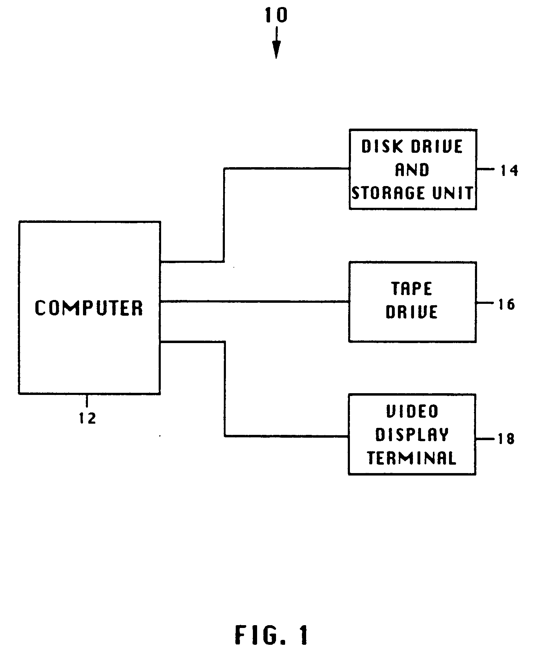

An exemplary embodiment of apparatus for practicing the present invention is shown in Fig. 1. The apparatus 10 comprises a computer 12 with associated peripheral equipment such as a disk drive and storage unit 14, a tape drive 16 and a video display terminal 18. The computer 12 is generally any high performance computer such as Tandem models CLX, VLX or Cyclone. In conjunction with the computer 10, a relational data base management system ("RDBMS") such as a Tandem Nonstop SQL is stored in disk drive 14. This Tandem RDBMS is a high performance system that is built into the operating system of the computer 12. All of the records, record tables, MX tables and XM tables are stored in the RDBMS which, in turn, is stored in disk drive 14. The video display terminal 18 is the user interface to apparatus 10 and is used for inputting of data records or query information and for displaying the retrieved records as a result of such queries.

The present invention provides two features that enable storage and retrieval of data records in a relational data base system. These features are storing data and associated retrieval files in the data base and using the retrieval files as indices to retrieve data from the data base. These processes may be either external or integrated with respect to the RDBMS. If the processes are external, there must be a layer of application software which invokes a standard RDBMS using conventional methods that is responsible for dealing with the specifics of XM handling. An integrated approach would involve extending the processing within the RDBMS product to handle XM processing transparent to any requesting process or person. In the exemplary embodiment disclosed herein, the processes are external to the RDBMS.

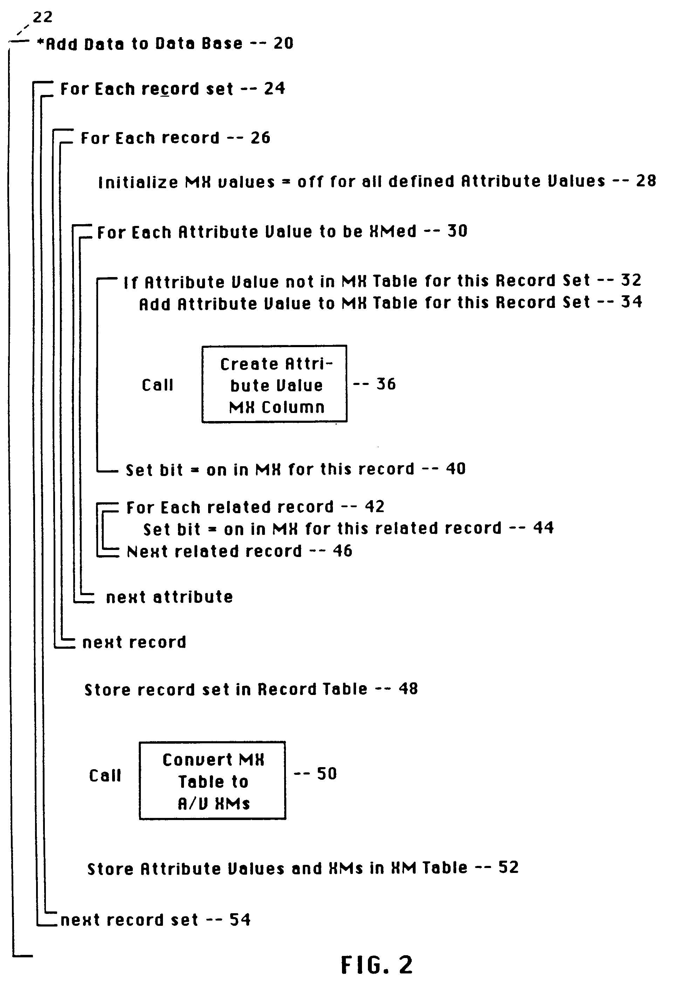

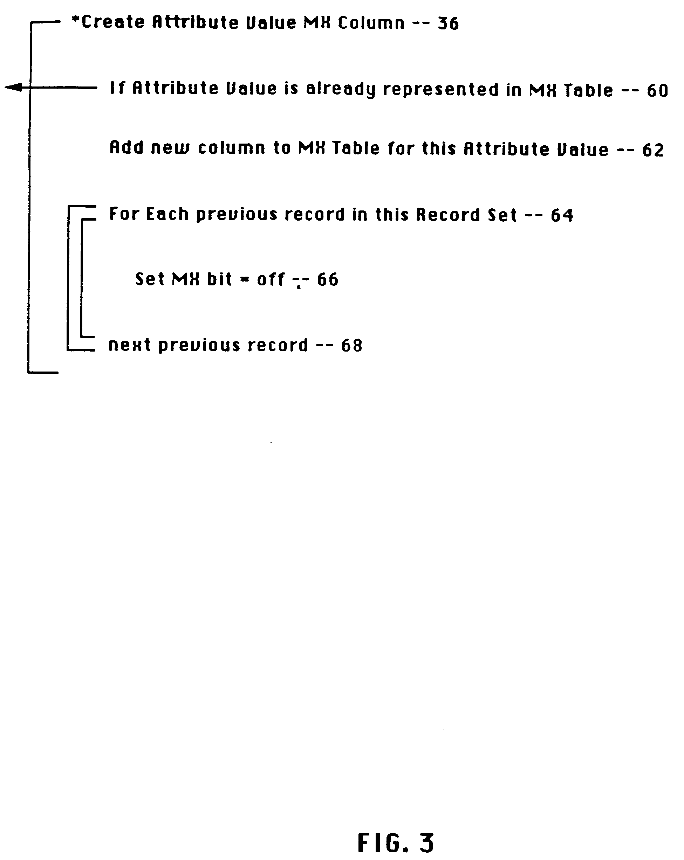

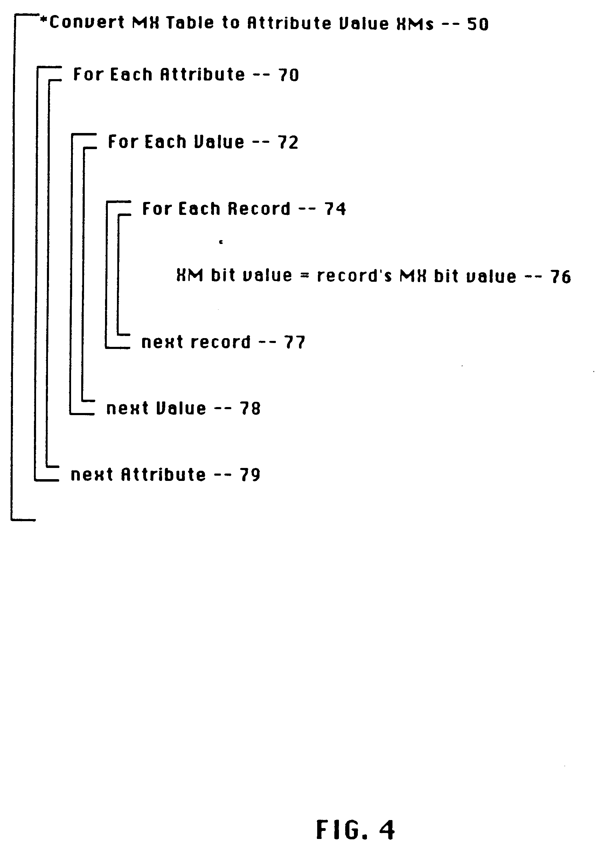

Reference is now made to Fig. 2 to illustrate the process of placing data requiring XM indexing into a relational data base. Fig. 2, in conjunction with Figs. 3 and 4, are action diagrams which illustrate this process. An action diagram is useful to describe the operation of a process in a structured fashion. The process illustrated in Fig. 2 is basically the same whether initially loading data into a new data base or adding new information to an already existing data base.

The process or procedure depicted in Fig. 2 is labeled "Add Data to Data Base" as indicated by reference numeral 20. This indicates that this procedure is responsible for adding data to the data base. The brackets on the left of the action diagrams of Figs. 2 - 5 delineate the scope of control of the structure within the procedure. Thus, the scope of the structure in this case, as indicated in Fig. 2 by a bracket 22, is the entire procedure.

The basic unit of processing is the "record set". As defined above, a "record set" is a number of records that are associated with each other through some relationship. It is incumbent upon the designer of a data base system to define the rules for identifying which records supplied to the software are associated together as a record set. These rules will differ with each application. The procedure 20 assumes that these rules have been defined and are available to the process.

As shown in Fig. 2 by reference numeral 24, the process is applied to each record set and the record sets are processed one at a time until there is no more data to be added to the data base. Within each record set, the process is applied to each record until there are no more records within the record set to be processed as indicated by reference numeral 26. It is within this structure that the main processing of the procedure 20 takes place and the MX table is created.

The first step performed is to initialize all MX values to the "off" position for all defined attribute values as indicated by reference numeral 28. The initial presumption for each record is that none of the attributes are present in the record to be processed. On and off can be represented in binary numbers as "1" and "0" or "0" and "1" respectively. Although the representation is arbitrary, it must be consistent throughout the process. In the preferred embodiment, "0" is used to represent off, i.e., that the attribute value is not present in the record, and "1" is used to represent on, i.e., that the attribute value is present in the record.

The next step starts another structure which will be performed for the currently considered record in the currently considered record set. This step designated by the reference numeral 30 defines a "For Each" loop wherein the following steps must be performed for each attribute value in the record to be XMed. A test is performed to determine if the attribute value being considered is not in the MX table for this record set. The value contained in this record for the attribute value being considered will only appear once in the MX table for this record set since there is only one column per attribute value in the MX table. Thus, if no previous record contained this value, it may not be in the MX table for this record set. The designer of the application may predetermine an initial set of attribute values to be included in the MX table.

If it is determined in a step designated by reference numeral 32 that the attribute value is not represented in the MX table, then the attribute value will be added to the MX table for this record set as shown by reference numeral 34. As indicated by reference numeral 36, the next step performed is a call to a procedure entitled "Create Attribute Value MX Column". This procedure is responsible for extending the MX table to include an additional column representing an attribute value and is set forth in Fig. 3.

If the current attribute value is already in the MX table for this record set, the above-described call procedure 36 is skipped. Instead, step 40 is performed where the MX bit is set for this record indicating the presence of the current attribute value in the current record. As indicated in step 40, the MX bit is set to "1", i.e., the on position.

Reference is now made to Fig. 3 to describe the procedure designated by reference numeral 36 for creating an attribute value MX column if the current attribute value is not stored in the MX table. If the attribute value to be added is already stored in the MX table, then control is passed back to the "Add Data to Data Base" procedure 20, step 40, as shown in a step designated by reference numeral 60. The first step performed as indicated by reference numeral 62 is to add a new column to the MX table for the current attribute value. Step 62 requires allocating an additional bit to represent the attribute value in the MX for each record previously processed, if any, as well as records in this record set to follow.

After the step 62 is performed, a "For Each" loop is executed for each previous record in the current record set as indicated by reference numeral 64. For each previous record, the MX bits are cleared, i.e., set to the off condition as indicated by reference numeral 66. The step 66 is executed since the current attribute value was not found in previous records. Thus, the MX bit in previous records should be set to indicate that those records did not contain the current attribute value. This process is continued for all previous records as indicated in Fig. 3 by reference numeral 68. After all previous records have been updated, control is passed back to procedure 20.

Upon returning to the procedure 20, a "For Each" loop is executed as indicated by reference numeral 42 to set the MX bit for all related records. If there is a relationship between the records within the record set, it may be reflected in the MX so that all of the related records will be retrieved along with the specified record. For all such related records, the fix bit is set as indicated in step 44. This process is repeated until all related records have been updated as indicated in step 46.

After all attribute Values for the current record have been processed, the "For Each record" loop 26 is repeated for each subsequent record in the current record set. Once all records in the current record set have been processed, the next step performed as indicated by reference numeral 48 is to store the record set in the record table of the data base.

After the record set is stored, the next step performed as indicated by reference numeral 50 is a call to a procedure entitled "Convert MX Table to A/V XMs". The procedure designated by reference numeral 50 in Fig. 4 converts the information stored in the completed fix table into XM values which can be stored in the XM table of the data base. This procedure is set forth in Fig. 4.

Reference is now made to Fig. 4 to describe the procedure 50 for converting the MX table to attribute value XMs. The procedure 50 comprises a series of nested "For Each" loops 70, 72 and 74 which accomplish the conversion. The only processing step is indicated as reference numeral 76. This process step is repeated for each attribute, for each attribute value and for each record.

As described above, an "MX" is a bit string wherein each bit represents the presence or absence of an attribute value that might apply to the record. The MXs generated for a data base are grouped into MX tables in which each row of the table contains the MX for a record in the record set. The MX table is created as an intermediate step to creating XMs. As described above, an XM is an arbitrary length bit string in which the relative bit number of each bit has a one-to-one relationship with the relative record number of a record in the related record set. The values of the bits represent the presence or absence of the specific attribute value associated with the XM. There is one XM for every attribute value associated with the records in the record set.

The order of processing the attributes is irrelevant provided all attributes are processed. There must be a one-to-one correspondence maintained between the attribute value text to be stored in the XM table and its corresponding attribute value XM to be stored in the same row as the text. The values are considered one at a time for each of the attributes in the MX table.

For each record, the corresponding XM bit value is set to equal the MX bit value of the record. The XM bits are set one at a time starting with the least significant or most significant bit where there is one XM bit for each MX in the MX table and, therefore, for each record in the record set. The value of the XM bit for a particular record is set to equal the value of the MX bit in the row of the MX table for that record which represents the attribute value under consideration during this iteration of the process.

The XM for the attribute value under consideration is completed when all the records of this record set (i.e., all rows of the MX table) have been processed. The foregoing step is repeated for the remaining values of the attribute under consideration one at a time. Control passes back to the "Add Data to Data Base" procedure 20 after all attributes in the MX table have been processed.

Upon returning to procedure 20, the last step of the procedure, indicated by reference numeral 52, is performed. This step accomplishes the storing of the XMs in the XM table. At this point, all data are in the data base for this record set and the input data from which the data was loaded can be archived or discarded.

The procedure is then repeated for all subsequent record sets one at a time as indicated in step 54. After the last record set is processed, the "Add Data to Data Base" procedure 20 is completed.

Another feature of the present invention is to provide a requestor with the ability to retrieve data stored in the data base. Data is retrieved through the retrieval process in sets where a set can consist of data from one or more record sets rather than one record at a time. Such processing approach is consistent with and complimentary to the approach used in traditional relational data base management systems.

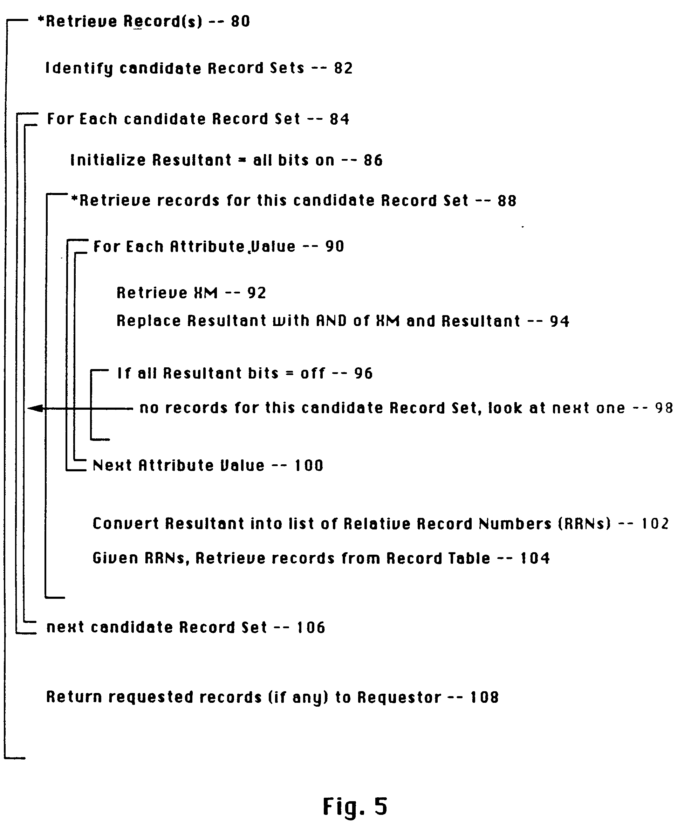

Referring now to Fig. 5 to illustrate the record retrieval feature of the present invention, there is an action diagram of such process. The process comprises a Retrieve Record(s) procedure which is designated by the reference numeral 80. As will be described below, a user or some other process submits a query to invoke this procedure. The query sent to this procedure may either comply with the ANSI standard for SQL format or some other format. The SQL format is utilized in the illustrated embodiment.

The query sent to the procedure illustrated in Fig. 5 may include one or more search terms that may be connected together by boolean operators such as an AND or an OR. The procedure illustrated in Fig. 5 is executed only once for search terms which are ANDed together whereas the procedure is repeated for each ORed search term.

The first step of the procedure 80 designated by reference numeral 82 is to identify candidate record sets which may contain data relevant to the query. This step is trivial if there is only one record set stored in the data base being queried. If there are multiple record sets but each is contained in its own table, the query will identify the tables to be accessed. However, if there are multiple record sets in a table, an initial query is issued against that table to identify the record sets in the table that should be further processed using the XMs. There may be different attribute values or different attribute types used to identify record sets of interest for different queries against the same data base.

The next processing step involves a "For Each" loop designated by reference numeral 84 that applies to all record sets identified in step 82. First, in a step designated by reference numeral 86, the resultant is initialized to set all bits to the on condition. As defined above, the resultant is a bit string which is created during the retrieval process. All records in the record set are considered candidate records. As the search arguments are processed, the corresponding XMs will be ANDed with the resultant to narrow the search, thus performing a filtration process. The resultant length will equal the length of the XMs for the records being processed.

The next step in loop 84 designated by reference numeral 88 is to retrieve all records for this candidate record set. This subprocess comprises the remaining steps within the "For Each" loop designated by reference numeral 84. The first step of this subprocess is another "For Each" loop designated by reference numeral 90 wherein each attribute value specified in the search query is used to retrieve the associated XM. To accomplish this, the associated XM is retrieved by issuing an SQL statement to the RDBMS which specifies the XM table, the record set ID if there are multiple record sets in the table, the text attribute value from the search argument and requests the corresponding XM from the table as shown in step 92. If a "not found" is returned from the RDBMS, the XM is assumed to have all bits off. The retrieved XM is then ANDed with the resultant as shown in step 94. The result of the AND operation then becomes the resultant. It should be noted that an OR operation may be required in some applications. Whether an AND or an OR operation is utilized is irrelevant to the processing performed by the present invention.

A test is then performed on the resultant as indicated in the step designated by reference numeral 96 to determine if all the bits of the resultant are off. If all the resultant bits are off, the current candidate record set has no records which match the query criteria. Under these conditions the process proceeds to step 106 at the end of the "For Each Candidate Record Set" loop 84 to consider the next candidate record set as shown by step 98. If, however, all the resultant bits are not off, the process continues by considering the next attribute value as shown in step 100.

After all the attribute values for a given candidate record set have been processed, the next step performed is designated by reference numeral 102. In step 102 the resultant is converted into a list of relative record numbers. The resultant is analyzed bit by bit beginning with the least significant or most significant bit (RBN = 0). If a bit is on, the relative bit number is added to the list of relative record numbers to be retrieved for this record set. If a bit is off, it is ignored and processing continues with the next bit of the resultant.

Based upon the relative record numbers obtained when all bits in the XM are analyzed, the records are retrieved from the record table as shown in step 104. To accomplish this the procedure issues an SQL statement specifying the record table, the record set ID if multiple record sets are in the table and relative record numbers of the records to be retrieved or from which attribute values are to be retrieved if the entire record is not needed. The retrieved records are buffered until all desired records are found.

After all of the foregoing steps are performed, the steps are repeated for each remaining candidate record set one at a time. Then, after all candidate record sets have been processed, the last step of procedure 80 is performed and the requested records are returned to the requestor as indicated by reference numeral 108. The standard response will be in tabular format as normally expected from a RDBMS. If no records were retrieved as a result of this process, a "not found" response is returned to the requestor.

Set forth below are examples to further illustrate the present invention. While these examples are elementary applications of the foregoing principles, it is to be understood that the features of the present invention can easily be extended to handle complex information storage and retrieval applications.

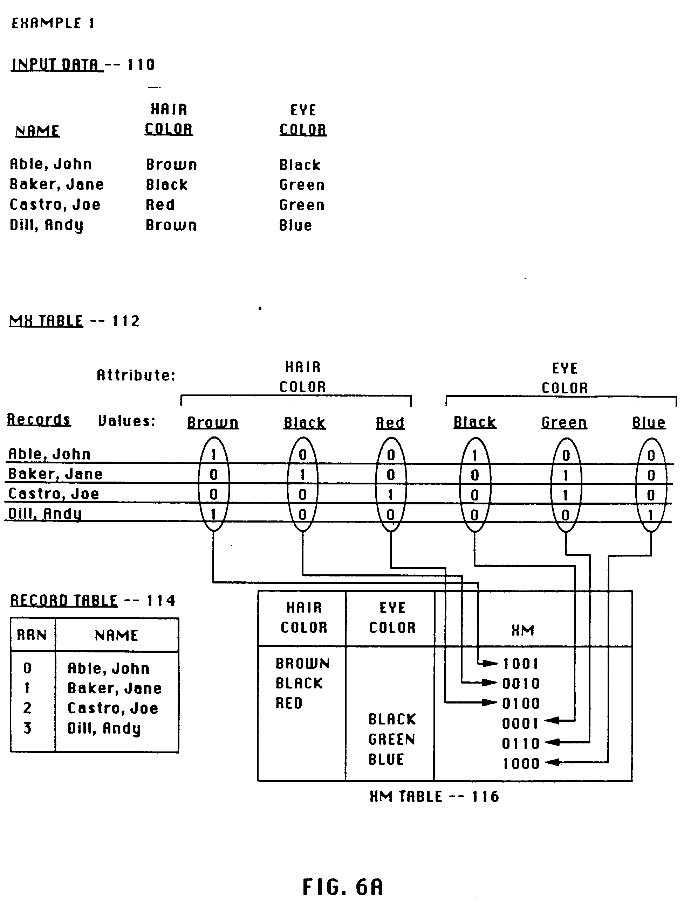

Reference is now made to Figs. 6A-6B to illustrate the first example. In this example, both the data base loading and retrieval features of the present invention are illustrated.

An input data table 110 is set forth in Fig. 6A. The table 110 shows the records that are supplied to the XM procedure "Add Data to Data Base" 20 illustrated in Fig. 2. A total of four records are included in input data table 110. The values of two attributes are given for each person represented by a record. The ordering of the records is alphabetical by name. For the purposes of this example, it is assumed that the data which comprises input table 110 is read into memory at the start of the process. Note that such information could originate from a variety of sources such as magnetic tape, user input, etc.

A second table 112 entitled "MX table" is also illustrated in Fig. 6A. The table 112 shows the results of having completed the "For Each Record" loop of the procedure 20. The MX table 112 is complete and contains a row for each input record in which each bit of that row represents the presence or absence in that record of a specific attribute value. A "1" indicates that the record has the specified attribute value. Note that since there is no relationship specified or implied in the input data between the records of this record set other than that of common record set membership, the steps within the "For Each Related Record" loop 42 of procedure 20 are not executed. It can be seen that for the first record, the MX value represents "hair color = brown" and "eye color = black".

A third table 114 in Fig. 6A is the record table. As explained above, a record table is a logical table where the data to be retrieved in response to data base queries are stored. Thus, any queries directed to this data base will specify either hair and/or eye color values and the records returned will only contain names.

A fourth table 116 included in Fig. 6A is the XM table. The XM table 116 contains columns for each attribute and each XM. There is only one row for each attribute value even though there may be multiple records containing that value. The information on which records contain the attribute value can be ascertained by decoding the XM. The XM table 116 is formed by the "Convert MX Table to Attribute Value XMs" procedure 50 in Fig. 4 which is called by the step "Call Convert MX Table to A/V XMs" 50 and "Store Attribute Values and XMs in XM Table" 52 from the "Add Data to Data Base" procedure 20 in Fig. 2.

Through the use of arrows, Fig. 6A shows the relationship of the columns in the MX table 112 to the XM values in the XM table 116. Note that the order of the rows in the XM table 116 is not important other than that all rows related to the same record set should be contiguous for optimum performance.

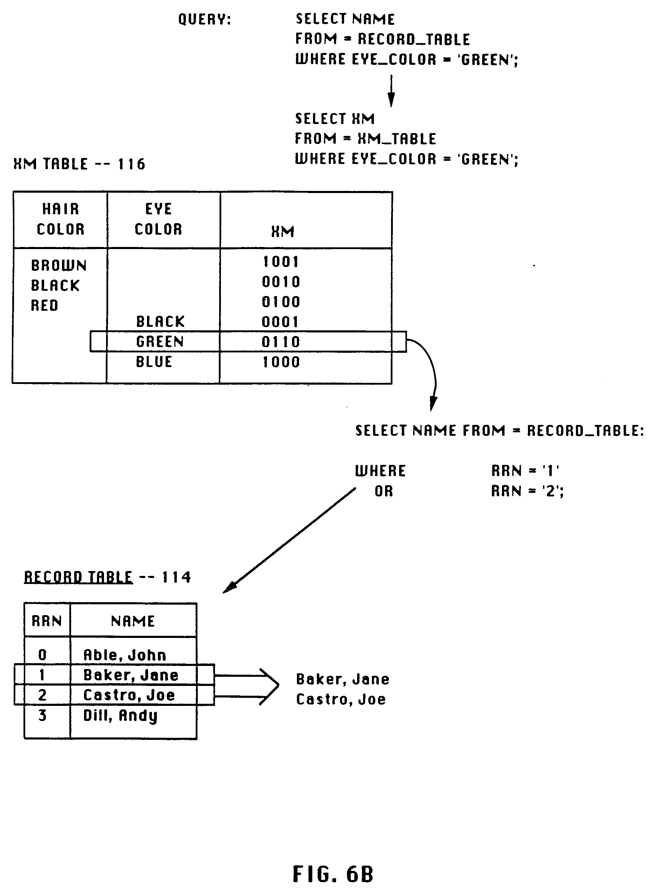

The retrieval feature of the present invention is illustrated in Fig. 6B utilizing the query in SQL format set forth below.

```
QUERY:     Select Name
           From = Record_Table
           Where Eye_Color = "Green";
```

The query is sent from a requestor, e.g., a user at the video display terminal 18 of Fig. 1, to the "Retrieve Record" process 80 illustrated in Fig. 5 for processing, not directly to the RDBMS. The search argument "Where Eye_Color = Green" of the query requests the list of all names in the data base corresponding to the people having green eyes.

Since there is only one record set in this example, it is identified by the process 80 as the candidate record set. Furthermore, since there is only one search argument and, therefore, only one attribute value to be found, the loop "For Each Attribute Value" 90 in process 80 is executed only once. The process 80 issues the following query in SQL format to the RDBMS:

```
Select XM
From = XM_Table
Where Eye_Color = "Green";
```

This query directs the RDBMS software to the XM table to retrieve the XM corresponding to the attribute value "Eye Color = Green". Pursuant to the query, the RDBMS returns a single value since there is only one row in the table having the specified attribute value. This row is indicated in the XM table 116 illustrated in Fig. 6B which is identical to the XM table 116 in Fig. 6A. This XM value when ANDed with the resultant yields the same XM value.

The next step in the process 80 is to convert the resultant into a list of relative record numbers. Upon performing this step, it is determined that the RRN list contains RRNs 1 and 2. In the following step, i.e., "Given RRNs, retrieve records from Record Table" 104 of the process 80, the SQL query set forth below is issued to the RDBMS to retrieve the proper records.

```
Select Name
From = Record_Table
Where RRN = 1
Or RRN = 2;
```

This query directs the RDBMS software to the record table to retrieve records one and two. As shown in the record table 114 illustrated in Fig. 6B which is identical to the record table 114 in Fig. 6A, the two records returned consist of the names Baker, Jane and Castro, Joe. Since there are no other candidate records to be searched by the process 80, these records are returned by process 80 to the requestor.

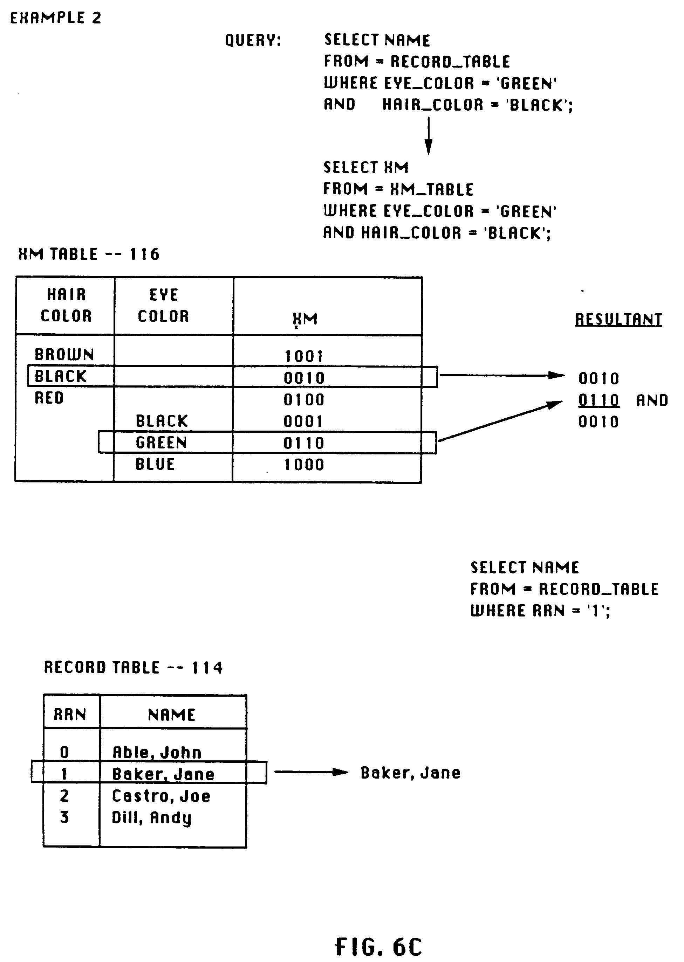

Referring now to Fig. 6C to illustrate a second example of the data base retrieval feature of the present invention, the query in SQL format for this example is set forth below.

```
QUERY:      Select Name
               From = Record_Table
               Where Eye_Color = "Green"
               And Hair_Color = "Black";
```

The query which specifies two search arguments is sent from a requestor, e.g., a user at the video display terminal 18 of Fig. 1, to the "Retrieve Record" process 80 illustrated in Fig. 5 for processing. This query requests the list of all names in the data base corresponding to the people having green eyes and black hair.

Since there is only one record set in this example, it is identified by the process 80 as the candidate record set. The process then issues the following query in SQL format to the RDBMS:

```
Select XM
From = XM_Table
Where Eye_Color = "Green"
Or Hair_Color = "Black";
```

Pursuant to the query, the RDBMS returns the XM values contained in the two rows for the specified attribute values. These rows are indicated in the XM table 116 illustrated in Fig. 6C which is identical to the XM table 116 in Figs. 6A and 6B. These XM values are individually ANDed with the resultant to form the final resultant indicated in Fig. 6C as 0010.

The next step in the process 80 is to convert the resultant into a list of relative record numbers. Upon performing this step, it is determined that the RRN list contains only RRN 1 since only one bit was set in the final resultant value. In the following step, i.e., "Given RRNs, retrieve records from Record Table" 104 of the process 80, the SQL query set forth below is issued to the RDBMS to retrieve the proper records.

```
Select Name
From = Record_Table
Where RRN = 1;
```

As shown in the record table 114 illustrated in Fig. 6C which is identical to the record table 114 in Figs. 6A and 6B, the record returned consists of the name Baker, Jane. Since there are no other candidate records to be searched by the process, this record is returned by process 80 to the requestor.

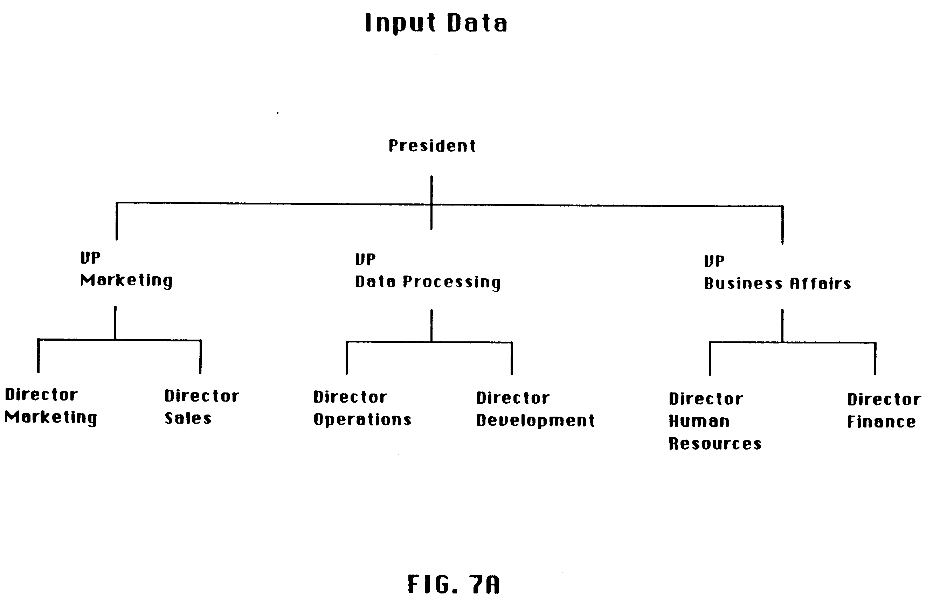

Reference is now made to Figs. 7A-7D to illustrate a second example of the data base loading and retrieval features of the present invention. In this example, a simple data base is created which contains data that describes positions in an organization.

The input data is set forth in Fig. 7A. The data in record form is supplied to the XM procedure "Add Data to Data Base" 20 illustrated in Fig. 2. The records are in the form of an organizational chart that shows the positions in an organization and demonstrates the hierarchical relationships between the various positions. Both the positions and the relationships must be reflected in the data base. This is to facilitate the retrieval of an ordered list of positions reflecting the organizational chain pursuant to search queries that specify a position as a search argument. Thus, not only will the record corresponding to the specified position be returned, but also the records corresponding to positions to which the specified position reports to and those immediately reporting to the specified position will be returned. The resulting record set is an example of a "hierarchical record set".

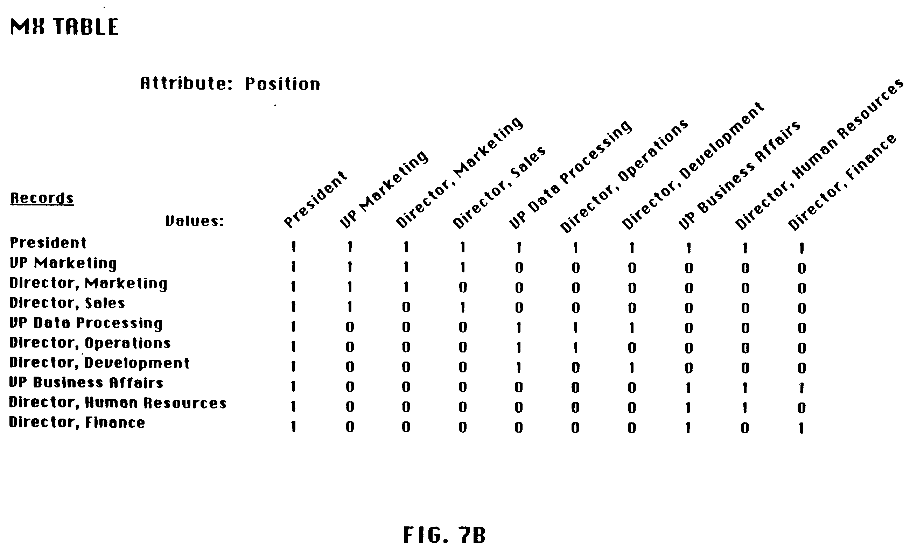

Fig. 7B illustrates the completed MX table that is compiled by the execution of the "Add Data to Data Base" procedure 20 illustrated in Fig. 2. This example is unusual in that the contents of the records are the same values of the single attribute "Position" used to retrieve the XMs.

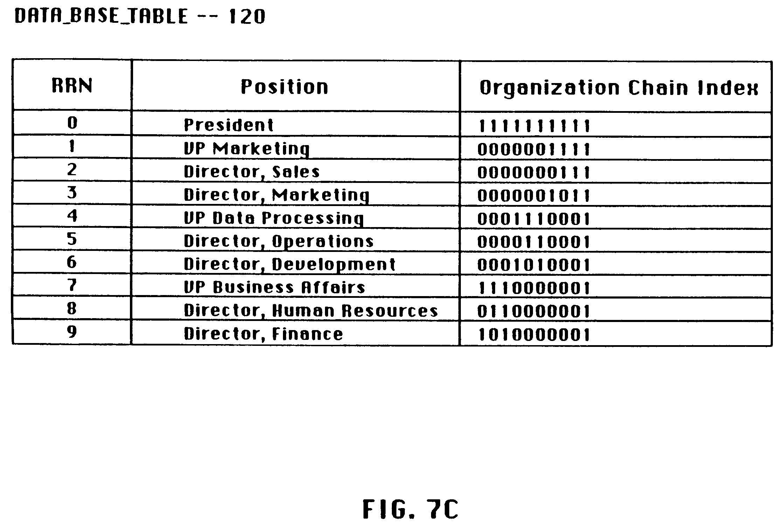

Fig. 7C illustrates a single data base table 120 that is created as a result of the execution of the "Add Data to Data Base" procedure 20. The data base table 120 illustrates an application where one table serves as both the record table and the XM table. The column "Position" in the table is the attribute value column for the logical XM table and is the record column for the logical record table. The XM values contain pointers to all records in the record set related, via the hierarchical organization relationship, to the record corresponding to the specified position. The XM is the only place in the data base containing this relationship. Note that this feature of the present invention eliminates the need to explicitly set forth the relationships as text values in data tables as would be required using a traditional RDBMS.

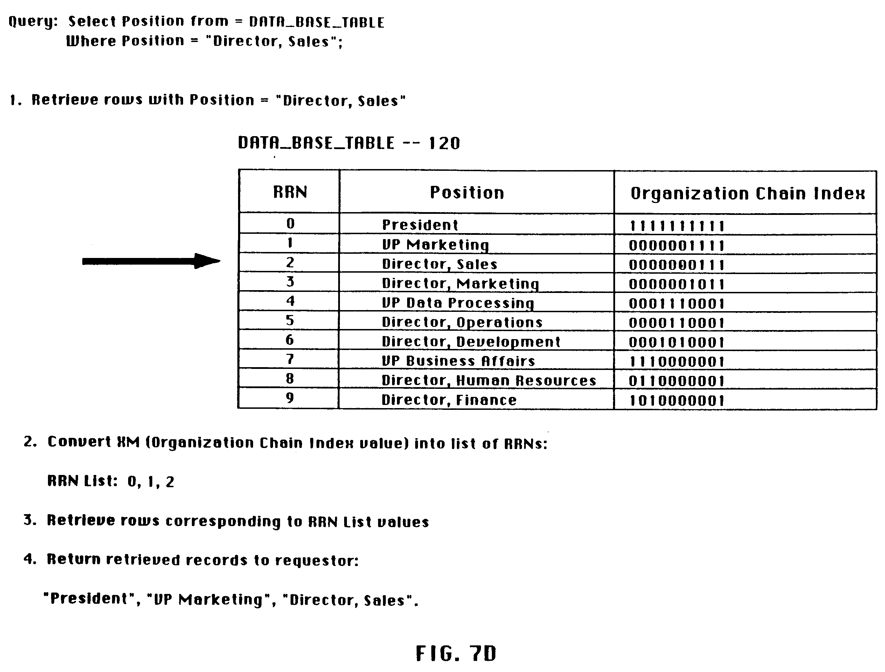

Referring now to Fig. 7D to illustrate the data base retrieval feature of the present invention utilizing the hierarchical data base relationship described above. The query in SQL format for this example is set forth below.

```
QUERY:    Select Position From = Data_Base_Table
          Where Position = "Director, Sales";
```

The query is sent from a requestor, e.g., a user at the video display terminal 18, to the "Retrieve Record" process 80 illustrated in Fig. 5 for processing. This query requests the organizational chain corresponding to the position "Director, Sales".

Since there is only one record set in this example, it is identified by the process 80 as the candidate record set. The process then issues the following query in SQL format:

```
Select Organization_Chain_Index
From = Data_Base_Table
Where Position = "Director, Sales";
```

Pursuant to the query, the RDBMS returns only one XM value contained in the one row since there is only one row in the data base table 120 corresponding to the specified attribute value. This row is indicated in Fig. 7D by an arrow. This XM value is then ANDed with the resultant to obtain the final resultant.

The next step in the process 80 is to convert the resultant into a list of relative record numbers. Upon performing this step, it is determined that the RRN list contains RRNs 0, 1 and 2. In the following step, i.e., "Given RRNs, retrieve records from Record Table" of the process 80, the SQL query set forth below is issued to the RDBMS to retrieve the proper records.

```
Select Position
From = Data_Base_Table
Where RRN = "0"
Or    RRN = "1"
Or    RRN = "2";
```

The records returned are, in the organization chain order, "President", "VP-Marketing" and "Director, Sales". Since there are no other candidate records to be searched by the process, these records are returned by process 80 to the requestor.

A specific exemplary implementation of the update and retrieval features of the present invention is set forth in the Microfiche Appendix attached hereto. This exemplary implementation in combination with the exemplary embodiment of apparatus for practicing the invention illustrated in Fig. 1 comprise a telephone directory data base which is created and utilized to retrieve telephone directory records to provide an efficient telephone directory assistance service. The exemplary implementation comprises a source code program listing to implement the creation and updating features of the present invention and a source code program listing to implement the retrieval feature of the present invention. The source code is written in the "C" programming language. It is compiled to run on the exemplary embodiment of apparatus for practicing the invention illustrated in Fig. 1. For a complete description of "C", reference should be made to Kernighan et al., The C Programming Language, (Prentice Hall, 1978).

From the foregoing, it is readily apparent that the present invention combines the flexibility and advantages of relational data base technology with the speed enhancing capabilities of the XM technique to achieve sub-second response times. Although only a few examples of this invention have been described in detail, it is clear that the features of the present invention may be adapted to many different situations without departing from the spirit of the invention.

**Claims**

1. A method for creating a plurality of files for storage in a relational data base management system resident in a computer based information storage and retrieval system, comprising the steps of:

(a) receiving a plurality of information bearing records including information that represents values of attributes of objects in the real world;

(b) generating an index retrieval file for facilitating the retrieval of particular desired records from said plurality of information bearing records, said index retrieval file comprising a plurality of bit strings, said generating including the steps of:

(i) defining a comprehensive set of attribute values comprising substantially all such attribute values which can be utilized to facilitate searching for desired information bearing records, and

(ii) forming the index retrieval file to indicate the presence or absence of an attribute value associated with the information content of each of said information bearing records by coding each bit in each one of the plurality of bit strings to indicate the presence or absence of an attribute value in the respectively corresponding record and also to individually and respectively correspond to addresses or locations where each of said information bearing records are stored in the relational data base management system; and

(c) storing the plurality of information bearing records and the index retrieval file at predetermined addresses or locations in the relational data base management system.

2. The method according to claim I wherein the plurality of bit strings comprising the index retrieval file are arranged in an array having rows and columns, each row of the array representing an attribute value of an object in the real world and each column of the array representing one of the plurality of information bearing records.

3. The method according to claim 1 wherein the plurality of information bearing records comprises at least one record set and prior to storing the plurality of information bearing records and the index retrieval file, steps (b) and (c) are repeated until all of the plurality of information bearing records of the at least one record set are processed.

4. The method according to claim 1 wherein the step of generating an index retrieval file further comprises the step of generating a preprocessing file having a plurality of binary elements, said generating comprising the steps of:

(a) initializing each one of the plurality of binary elements contained in the preprocessing file to a first predetermined state to indicate the absence of said attribute values;

(b) individually determining for each attribute value represented in the plurality of information bearing records whether the current attribute value being processed is available in the preprocessing file;

(c) if the current attribute value is not available in the preprocessing file,

(i) extending the plurality of binary elements in the preprocessing file to include the current attribute value,

(ii) setting the binary element representative of the current attribute value for the information bearing records previous to the one being processed to a predetermined state to indicate the unavailability of the attribute value, and

(iii) setting the binary element representative of the current attribute value for the information bearing record being processed to a second predetermined state to indicate the availability of the attribute value;

(d) if the attribute value is available in the preprocessing file, setting the binary element representative of the current attribute value for the current information bearing record to a second predetermined state to indicate the availability of the attribute value;

(e) creating the index retrieval file from the preprocessing file; and

(f) storing said plurality of information bearing records in a record retrieval file.

5. The method according to claim 4 wherein the step of generating said preprocessing file for facilitating the retrieval of particular desired records from said plurality of information bearing records further comprises the step of processing each attribute value stored in the preprocessing file to create the index retrieval file to match the plurality of bit strings in the index retrieval file to the binary elements in the preprocessing file for each one of the plurality of the information bearing records.

6. The method according to claim 4 wherein prior to the step of storing said plurality of information bearing records in a record retrieval file, further comprising the step of setting the binary element representative of the current attribute value for each of a related one of said plurality of information bearing record to the second predetermined state to indicate the presence of the attribute value when a current one of said plurality of information bearing records being processed to ascertain the presence or absence of the values of said attributes is related to other ones of said plurality of information bearing records already stored at predetermined addresses or locations in the relational data base management system.

7. A method for retrieving files stored in a relational data base management system in a computer based information storage and retrieval system, comprising the steps of:

(a) maintaining a plurality of information bearing records at predetermined addresses or locations in the relational data base management system, each one of said plurality of records including information that represents values of attributes of an object in the real world;

(b) maintaining an index retrieval file for facilitating the retrieval of particular desired records from said plurality of information bearing records, said index retrieval file comprising a plurality of bit strings, each one of the plurality of bit strings representing one of said attribute values, each bit in each one of the plurality of the bit strings indicates the presence or absence of the one of said attribute values in each one of the plurality of information bearing records and also individually and respectively corresponds to addresses or locations where each one of said plurality of information bearing records is stored in the relational data base management system;

(c) receiving a query that requests retrieval of information from the relational data base management system, said query comprises at least one search argument that specifies a desired attribute value to be matched to the attribute values contained within the plurality of information bearing records; and

(d) locating and retrieving the particular desired records by:

(i) determining a subset of said plurality of information bearing records in which the desired attribute value is present by examining the respective corresponding bit string representative of said desired attribute value to determine if the desired attribute value is present for each one of the plurality of information bearing records, and

(ii) translating the bits in the bit string to ascertain addresses or locations where each one of the desired records containing the desired attribute value is stored.

8. The method according to claim 7 wherein the plurality of bit strings comprising the index retrieval file are arranged in an array having rows and columns, each row of the array representing an attribute value of an object in the real world and each column of the array representing one of the plurality of information bearing records.

9. The method according to claim 7 further comprising the step of retrieving the particular desired records containing said desired attribute value from the addresses or locations where each one of the desired records is stored.

10. The method according to claim 7 wherein the information bearing records are divided into a plurality of record sets and the step of locating and retrieving particular desired records further comprises the step of identifying each one of the plurality of record sets which may contain the desired attribute value.

11. The method according to claim 9 wherein the step of retrieving the particular desired records containing said desired attribute value further comprises the step of issuing a second data base query to the relational data base management system to retrieve the particular desired records which satisfy the at least one search argument of the query.

12. A method for retrieving files stored in a relational data base management system in a computer based information storage and retrieval system, comprising the steps of:

(a) maintaining a plurality of information bearing records at predetermined addresses or locations in the relational data base management system, each of one of said plurality of records including information that represents values of attributes of an object in the real world;

(b) maintaining an index retrieval file for facilitating the retrieval of particular desired records from said plurality of information bearing records, said index retrieval file comprising a plurality of bit strings, each one of the plurality of bit strings representing one of said attribute values, each bit in each one of the plurality of the bit strings indicates the presence or absence of the one of said attribute values in one of the plurality of information bearing records and also individually and respectively corresponds to addresses or locations where one of said plurality of information bearing records is stored in the relational data base management system;

(c) receiving a query that requests retrieval of information from the relational data base management system, said query comprises a plurality of search arguments that specify a plurality of desired attribute values to be matched to the attribute values contained within the plurality of information bearing records;

(d) initializing each bit in a masking bit string to a first predetermined state;

(e) locating and retrieving the particular desired records by:

(i) determining a subset of said plurality of information bearing records in which one of the plurality of desired attribute values is present by examining the respective corresponding bit string representative of one of the plurality of desired attribute values to determine if the one of the plurality of desired attribute values is present for each one of the plurality of information bearing records,

(ii) performing a boolean operation on the respective corresponding bit string representative of one of the plurality of desired attribute values and the masking bit string to identify the particular desired records which match the plurality of search arguments in the query, the result of the boolean operation is maintained in the masking bit string, and

(iii) repeating steps (i) and (ii) for each one of the plurality of desired attribute values;

(f) if all bits in the masking bit string are in a second predetermined state, aborting the processing of said query; and

(g) if at least one of the bits in the masking bit string is in the first predetermined state, converting the masking bit string into a list of relative record numbers which identify addresses or locations where the particular desired records which satisfy the plurality of search arguments of the query are stored.

13. The method according to claim 12 further comprising the step of retrieving the particular desired records containing the plurality of desired attribute values from the identified addresses or locations.

14. The method according to claim 12 wherein the plurality of bit strings comprising the index retrieval file are arranged in an array having rows and columns, each row of the array representing an attribute value of an object in the real world and each column of the array representing one of the plurality of information bearing records.

15. The method according to claim 12 wherein the information bearing records are divided into a plurality of record sets and the step of locating and retrieving particular desired records further comprises the step of identifying each one of the plurality of record sets which may contain the plurality of desired attribute values.

16. The method according to claim 15 wherein the step of retrieving the particular desired records containing the plurality of desired attribute values further comprises the step of issuing a second data base query to the relational data base management system to retrieve the particular desired records which satisfy the plurality of search arguments of the query.

17. A method for creating a plurality of files for storage in a relational data base management system resident in a computer based information storage and retrieval system and for retrieving said files stored in the relational data base management system, comprising the steps of:

(a) receiving a plurality of information bearing records including information that represents values of attributes of objects in the real world;

(b) generating an index retrieval file for facilitating the retrieval of particular desired records from said plurality of information bearing records, said index retrieval file comprising a plurality of bit strings, said generating including the steps of:

(i) defining a comprehensive set of attribute values comprising substantially all such attribute values which can be utilized to facilitate searching for desired information bearing records, each one of the plurality of bit strings representing one of said attribute values, and

(ii) forming the plurality of bit strings wherein each bit in each one of the plurality of the bit strings indicates the presence or absence of the one of said attribute values in one of the plurality of information bearing records and also individually and respectively corresponds to addresses or locations where one of said plurality of information bearing records is stored in the relational data base management system;

(c) storing the plurality of information bearing records and the index retrieval file at predetermined addresses or locations in the relational data base management system;

(d) receiving a query that requests retrieval of information from the relational data base management system, said query comprises at least one search argument that specifies a desired attribute value to be matched to the attribute values comprising the plurality of information bearing records;

(e) locating and retrieving the particular desired records by:

(i) determining a subset of said plurality of information bearing records in which the desired attribute value is present by examining the respective corresponding bit string representative of said desired attribute value to determine if the desired attribute value is present for each one of the plurality of information bearing records, and

(ii) translating the bits in the bit string to ascertain addresses or locations where each one of the desired records containing the desired attribute value is stored; and

(f) issuing a second data base query to the relational data base management system to retrieve the particular desired records which satisfy the at least one search argument of the query; and

(g) retrieving the particular desired records containing the desired attribute values from the identified addresses or locations.

18. A method for creating a plurality of files for storage in a relational data base management system resident in a computer based information storage and retrieval system and for retrieving said files stored in the relational data base management system, comprising the steps of:

(a) receiving a plurality of information bearing records including information that represents values of attributes of objects in the real world;

(b) generating an index retrieval file for facilitating the retrieval of particular desired records from said plurality of information bearing records, said index retrieval file comprising a plurality of bit strings, said generating including the steps of:

(i) defining a comprehensive set of attribute values comprising substantially all such attribute values which can be utilized to facilitate searching for desired information bearing records, each one of the plurality of bit strings representing one of said attribute values, and

(ii) forming the plurality of bit strings wherein each bit in each one of the plurality of the bit strings indicates the presence or absence of the one of said attribute values in one of the plurality of information bearing records and also individually and respectively corresponds to addresses or locations where one of said plurality of information bearing records is stored in the relational data base management system;

(c) storing the plurality of information bearing records and the index retrieval file at predetermined addresses or locations in the relational data base management system;

(d) receiving a query that requests retrieval of information from the relational data base management system, said query comprises a plurality of search arguments that specify a plurality of desired attribute values to be matched to the attribute values comprising the plurality of information bearing records;

(e) initializing each bit in a masking bit string to a first predetermined state;

(f) locating and retrieving the particular desired records by:

(i) determining a subset of said plurality of information bearing records in which one of the plurality of desired attribute values is present by examining the respective corresponding bit string representative of one of the plurality of desired attribute values to determine if the one of the plurality of desired attribute values is present for each one of the plurality of information bearing records,

(ii) performing a boolean operation on the respective corresponding bit string representative of one of the plurality of desired attribute values and the masking bit string to identify the particular desired records which match the plurality of search arguments in the query, the result of the boolean operation is maintained in the masking bit string, and

(iii) repeating steps (i) and (ii) for each one of the plurality of desired attribute values;

(g) if all bits in the masking bit string are in a second predetermined state, aborting the processing of said query;

(h) if at least one of the bits in the masking bit string is in the first predetermined state, converting the masking bit string into a list of relative record numbers which identify addresses or locations where the particular desired records which satisfy the plurality of search arguments of the query are stored;

(i) issuing a second data base query to the relational data base management system to retrieve the particular desired records which satisfy the plurality of search arguments of the query; and

(j) retrieving the particular desired records containing said plurality of desired attribute values from the identified addresses or locations.

**19.** A computer based information storage and retrieval system comprising:

a relational data base management system stored in said computer based information storage and retrieval system;

means for receiving a plurality of information bearing records which include information that represents values of attributes of objects in the real world;

means for generating an index retrieval file for facilitating the retrieval of particular desired records from said plurality of information bearing records, said index retrieval file comprising a plurality of bit strings, said means for generating an index retrieval file comprising:

means for defining a comprehensive set of attribute values comprising substantially all such attribute values which can be utilized to facilitate searching for desired information bearing records, and

means for forming the index retrieval file to indicate the presence or absence of an attribute value associated with the information content of each of said information bearing records including means for coding each bit in each one of the plurality of bit strings to indicate the presence or absence of an attribute value in the respectively corresponding record and also to individually and respectively correspond to addresses or locations where each of said information bearing records are stored in the relational data base management system; and

means for storing the plurality of information bearing records and the index retrieval file at predetermined addresses or locations in the relational data base management system.

**20.** The computer based information storage and retrieval system of claim 19 wherein the plurality of bit strings comprising the index retrieval file are arranged in an array having rows and columns, each row of the array representing an attribute value of an object in the real world and each column of the array representing one of the plurality of information bearing records.

**21.** The computer based information storage and retrieval system of claim 19 wherein the means for generating an index retrieval file further includes means for generating a preprocessing file having a plurality of binary elements, said means including:

means for initializing each one of the plurality of binary elements contained in the preprocessing file to a first predetermined state to indicate the absence of said attributes values;

means for individually determining for each attribute value represented in the plurality of information bearing records whether the current attribute value being processed is available in the preprocessing file;

means for extending the plurality of binary elements in the preprocessing file to include the current attribute value and first means for setting the binary element representative of the current attribute value for the information bearing records prior to the one being processed to a first predetermined state to indicate the unavailability of the attribute value and for setting the binary element representative of

16

the current attribute value for the information bearing record being processed to a second predetermined state to indicate the availability of the attribute value when the current attribute value is not available in the preprocessing file;

second means for setting the binary element representative of the current attribute value for the current information bearing record to a second predetermined state to indicate the availability of the attribute value when the attribute value is available in the preprocessing file;

means for creating the index retrieval file from the preprocessing file;

means for storing said plurality of information bearing records in a record retrieval file.

22. The computer based information storage and retrieval system of claim 21 wherein the means for generating an index retrieval file further comprises means for processing each attribute value stored in the preprocessing file to create the index retrieval file to match the plurality of bit strings in the index retrieval file to the binary elements in the preprocessing file for each one of the plurality of the information bearing records.

23. The computer based information storage and retrieval system of claim 21 further comprising means for setting the binary element representative of the current attribute value for each of a related one of said plurality of information bearing record to the second predetermined state to indicate the presence of the attribute value when a current one of said plurality of information bearing records being processed to ascertain the presence or absence of the values of said attributes is related to other ones of said plurality of information bearing records already stored at predetermined addresses or locations in the relational data base management system.

24. A computer based information storage and retrieval system comprising:

a relational data base management system stored in said computer based information storage and retrieval system;

first means for maintaining a plurality of information bearing records at predetermined addresses or locations in said relational data base management system, each of said plurality of records includes information that represents values of attributes of an object in the real world;

second means for maintaining an index retrieval file for facilitating the retrieval of particular desired records from said plurality of information bearing records, said index retrieval file comprising a plurality of bit strings, each one of the plurality of bit strings representing one of said attribute values, each bit in each one of the plurality of the bit strings indicates the presence or absence of the one of said attribute values in one of the plurality of information bearing records and also individually and respectively corresponds to addresses or locations where one of said plurality of information bearing records are stored in the relational data base management system;

means for receiving a query that requests retrieval of information from the relational data base management system, said query comprises at least one search argument that specifies a desired attribute value to be matched to the attribute values contained within the plurality of information bearing records;

means for locating and retrieving particular desired records, said means including:

means for determining a subset of said plurality of information bearing records in which the desired attribute value is present including means for examining the respective corresponding bit string representative of said desired attribute value to determine if the desired attribute value is present for each one of the plurality of information bearing records, and

means for translating the bits in the bit string to ascertain addresses or locations where each one of the desired records containing the desired attribute value is stored.

25. The computer based information storage and retrieval system of claim 24 further comprising means for retrieving the particular desired records containing said desired attribute value from the identified addresses or locations where each one of the particular desired records is stored.

26. The computer based information storage and retrieval system of claim 24 wherein the plurality of bit strings comprising the index retrieval file are arranged in an array having rows and columns, each row of the array representing an attribute value of an object in the real world and each column of the array representing one of the plurality of information bearing records.

27. The computer based information storage and retrieval system of claim 24 wherein the information

17

bearing records are divided into a plurality of record sets and the means for locating and retrieving particular desired records further comprises means for identifying each one of the plurality of record sets which may contain the desired attribute value.

28. A computer based information storage and retrieval system comprising:

a relational data base management system stored in said computer based information storage and retrieval system;

first means for maintaining a plurality of information bearing records at predetermined addresses or locations in said relational data base management system, each of said plurality of records includes information that represents values of attributes of an object in the real world;

second means for maintaining an index retrieval file for facilitating the retrieval of particular desired records from said plurality of information bearing records, said index retrieval file comprising a plurality of bit strings, each one of the plurality of bit strings representing one of said attribute values, each bit in each one of the plurality of the bit strings indicates the presence or absence of the one of said attribute values in one of the plurality of information bearing records and also individually and respectively corresponds to addresses or locations where one of said plurality of information bearing records are stored in the relational data base management system;

means for receiving a query that requests retrieval of information from the relational data base management system, said query comprises a plurality of search arguments that specify a plurality of desired attribute values to be matched to the attribute values contained within the plurality of information bearing records;

means for initializing each bit in a masking bit string to a first predetermined state;

means for locating and retrieving particular desired records, said means including:

means for determining a subset of said plurality of information bearing records in which each one of the plurality of desired attribute values is present including means for examining each respective corresponding bit string representative of each one of the plurality of desired attribute values to determine if each one of the plurality of desired attribute values is present for each one of the plurality of information bearing records, and

means for individually performing a boolean operation on each one of the respective corresponding bit string representative of each one of the plurality of desired attribute values and the masking bit string to identify the particular desired records which match the plurality of search arguments in the query;

means for converting the masking bit string into a list of relative record numbers which identify the addresses or locations where the particular desired records which satisfy the plurality of search arguments of the query are stored when at least one of the bits in the masking bit string is in the first predetermined state.

29. The computer based information storage and retrieval system of claim 28 further comprising means for retrieving the particular desired records containing the plurality of desired attribute values from the identified addresses or locations where the particular desired records are stored.

30. The computer based information storage and retrieval system of claim 29 wherein the means for retrieving the particular desired records further comprises means for issuing a second data base query to the relational data base management system to retrieve the identified records which satisfy the plurality of search arguments of the query.

31. The computer based information storage and retrieval system of claim 28 wherein the plurality of bit strings comprising the index retrieval file are arranged in an array having rows and columns, each row of the array representing an attribute value of an object in the real world and each column of the array representing one of the plurality of information bearing records.

32. A computer based information storage and retrieval system comprising:

a relational data base management system stored in said computer based information storage and retrieval system;

means for receiving a plurality of information bearing records including information that represents values of attributes of objects in the real world;

means for generating an index retrieval file for facilitating the retrieval of particular desired records from said plurality of information bearing records, said index retrieval file comprising a plurality of bit

18

strings, said means for generating an index retrieval file comprising:

means for defining a comprehensive set of attribute values comprising substantially all such attribute values which can be utilized to facilitate searching for desired information bearing records, each one of the plurality of bit strings representing one of said attribute values, and

means for forming the plurality of bit strings wherein each bit in each one of the plurality of the bit strings indicates the presence or absence of the one of said attribute values in one of the plurality of information bearing records and also individually and respectively corresponds to addresses or locations where one of said plurality of information bearing records are stored in the relational data base management system;

means for storing the plurality of information bearing records and the retrieval file at predetermined addresses or locations in the relational data base management system;

means for receiving a query that requests retrieval of information from the relational data base management system, said query comprises at least one search argument that specifies a desired attribute value to be matched to the attribute values comprising the plurality of information bearing records;

means for locating and retrieving the particular desired records, said means including:

means for determining a subset of said plurality of information bearing records in which the desired attribute value is present including means for examining the respective corresponding bit string representative of said desired attribute value to determine if the desired attribute value is present for each one of the plurality of information bearing records, and

means for translating the bits in the bit string to ascertain addresses or locations where each one of the desired records containing the desired attribute value is stored;

means for issuing a second data base query to the relational data base management system to retrieve the particular desired records which satisfy the at least one search argument of the query; and

means for retrieving the particular desired records containing said plurality of desired attribute values from the identified addresses or locations.

33. A computer based information storage and retrieval system comprising:

a relational data base management system stored in said computer based information storage and retrieval system;

means for receiving a plurality of information bearing records including information that represents values of attributes of objects in the real world;

means for generating an index retrieval file for facilitating the retrieval of particular desired records from said plurality of information bearing records, said index retrieval file comprising a plurality of bit strings, said means for generating an index retrieval file comprising:

means for defining a comprehensive set of attribute values comprising substantially all such attribute values which can be utilized to facilitate searching for desired information bearing records, each one of the plurality of bit strings representing one of said attribute values, and

means for forming the plurality of bit strings wherein each bit in each one of the plurality of the bit strings indicates the presence or absence of the one of said attribute values in one of the plurality of information bearing records and also individually and respectively corresponds to addresses or locations where one of said plurality of information bearing records are stored in the relational data base management system;

means for storing the plurality of information bearing records and the retrieval file at predetermined addresses or locations in the relational data base management system;

means for receiving a query that requests retrieval of information from the relational data base management system, said query comprises a plurality of search arguments that specify a plurality of desired attribute values to be matched to the attribute values comprising the plurality of information bearing records;

means for initializing each bit in a masking bit string to a first predetermined state;

means for locating and retrieving particular desired records, said means including:

means for determining a subset of said plurality of information bearing records in which each one of the plurality of desired attribute values is present including means for examining each respective corresponding bit string representative of each one of the plurality of desired attribute values to determine if each one of the plurality of desired attribute values is present for each one of the plurality of information bearing records, and

means for individually performing a boolean operation on each one of the respective corresponding bit string representative of each one of the plurality of desired attribute values and the masking bit string to identify the particular desired records which match the plurality of search arguments in the query;

means for converting the masking bit string into a list of relative record numbers which identify the addresses or locations where the particular desired records which satisfy the plurality of search arguments of the query are stored when at least one of the bits in the masking bit string are in the first predetermined state;

means for issuing a second data base query to the relational data base management system to retrieve the particular desired records which satisfy the at least one search argument of the query; and

means for retrieving the particular desired records containing said plurality of desired attribute values from the identified addresses or locations.

10

DISK DRIVE
AND
STORAGE UNIT — 14

COMPUTER

12

TAPE
DRIVE — 16

VIDEO
DISPLAY
TERMINAL — 18

FIG. 1

_22_

\* Add Data to Data Base -- 20

For Each record set -- 24

For Each record -- 26

Initialize MX values = off for all defined Attribute Values -- 28

For Each Attribute Value to be XMed -- 30

If Attribute Value not in MX Table for this Record Set -- 32
Add Attribute Value to MX Table for this Record Set -- 34

Call | Create Attri-
bute Value
MX Column | -- 36

Set bit = on in MX for this record -- 40

For Each related record -- 42
Set bit = on in MX for this related record -- 44
Next related record -- 46

next attribute

next record

Store record set in Record Table -- 48

Call | Convert MX
Table to
A/V XMs | -- 50

Store Attribute Values and XMs in XM Table -- 52

next record set -- 54

FIG. 2

*Create Attribute Value MX Column -- 36

If Attribute Value is already represented in MX Table -- 60

Add new column to MX Table for this Attribute Value -- 62

For Each previous record in this Record Set -- 64

Set MX bit = off -- 66

next previous record -- 68

# FIG. 3

*Convert MX Table to Attribute Value XMs -- 50

For Each Attribute -- 70

For Each Value -- 72

For Each Record -- 74

XM bit value = record's MX bit value -- 76

next record -- 77

next Value -- 78

next Attribute -- 79

FIG. 4

*Retrieve Record(s) -- 80

Identify candidate Record Sets -- 82

For Each candidate Record Set -- 84

Initialize Resultant = all bits on -- 86

*Retrieve records for this candidate Record Set -- 88

For Each Attribute Value -- 90

Retrieve XM -- 92

Replace Resultant with AND of XM and Resultant -- 94

If all Resultant bits = off -- 96

no records for this candidate Record Set, look at next one -- 98

Next Attribute Value -- 100

Convert Resultant into list of Relative Record Numbers (RRNs) -- 102

Given RRNs, Retrieve records from Record Table -- 104

next candidate Record Set -- 106

Return requested records (if any) to Requestor -- 108

Fig. 5

25

EXAMPLE 1

INPUT DATA -- 110

| NAME | HAIR COLOR | EYE COLOR |
|------|-----------|-----------|
| Able, John | Brown | Black |
| Baker, Jane | Black | Green |
| Castro, Joe | Red | Green |
| Dill, Andy | Brown | Blue |

MX TABLE -- 112

| | Attribute: | HAIR COLOR | | | EYE COLOR | | |
|---|---|---|---|---|---|---|---|
| Records | Values: | Brown | Black | Red | Black | Green | Blue |
| Able, John | | 1 | 0 | 0 | 1 | 0 | 0 |
| Baker, Jane | | 0 | 1 | 0 | 0 | 1 | 0 |
| Castro, Joe | | 0 | 0 | 1 | 0 | 1 | 0 |
| Dill, Andy | | 1 | 0 | 0 | 0 | 0 | 1 |

RECORD TABLE -- 114

| RRN | NAME |
|-----|------|
| 0 | Able, John |
| 1 | Baker, Jane |
| 2 | Castro, Joe |
| 3 | Dill, Andy |

| HAIR COLOR | EYE COLOR | XM |
|-----------|-----------|-----|
| BROWN BLACK RED | | 1001 0010 0100 |
| | BLACK GREEN BLUE | 0001 0110 1000 |

XM TABLE -- 116

# FIG. 6A

QUERY:      SELECT NAME
FROM = RECORD_TABLE
WHERE EYE_COLOR = 'GREEN';

SELECT XM
FROM = XM_TABLE
WHERE EYE_COLOR = 'GREEN';

XM TABLE -- 116

| HAIR COLOR | EYE COLOR | XM |
|---|---|---|
| BROWN | | 1001 |
| BLACK | | 0010 |
| RED | | 0100 |
| | BLACK | 0001 |
| | GREEN | 0110 |
| | BLUE | 1000 |

SELECT NAME FROM = RECORD_TABLE:

WHERE         RRN = '1'
OR           RRN = '2';

RECORD TABLE -- 114

| RRN | NAME |
|---|---|
| 0 | Able, John |
| 1 | Baker, Jane |
| 2 | Castro, Joe |
| 3 | Dill, Andy |

Baker, Jane
Castro, Joe

FIG. 6B

27

EXAMPLE 2

QUERY:  SELECT NAME
FROM = RECORD_TABLE
WHERE EYE_COLOR = 'GREEN'
AND    HAIR_COLOR = 'BLACK';

↓

SELECT XM
FROM = XM_TABLE
WHERE EYE_COLOR = 'GREEN'
AND HAIR_COLOR = 'BLACK';

XM TABLE -- 116

| HAIR COLOR | EYE COLOR | XM |
|---|---|---|
| BROWN | | 1001 |
| BLACK | | 0010 |
| RED | | 0100 |
| | BLACK | 0001 |
| | GREEN | 0110 |
| | BLUE | 1000 |

RESULTANT

0010

0110  AND
0010

SELECT NAME
FROM = RECORD_TABLE
WHERE RRN = '1';

RECORD TABLE -- 114

| RRN | NAME |
|---|---|
| 0 | Able, John |
| 1 | Baker, Jane |
| 2 | Castro, Joe |
| 3 | Dill, Andy |

Baker, Jane

FIG. 6C

# Input Data

President

UP Marketing

Director Marketing

Director Sales

UP Data Processing

Director Operations

Director Development

UP Business Affairs

Director Human Resources

Director Finance

FIG. 7A

# MX TABLE

### Attribute: Position

**Records**

| Values: | President | VP Marketing | Director, Marketing | Director, Sales | VP Data Processing | Director, Operations | Director, Development | VP Business Affairs | Director, Human Resources | Director, Finance |
|---|---|---|---|---|---|---|---|---|---|---|
| President | 1 | 1 | 1 | 1 | 1 | 1 | 1 | 1 | 1 | 1 |
| VP Marketing | 1 | 1 | 1 | 1 | 0 | 0 | 0 | 0 | 0 | 0 |
| Director, Marketing | 1 | 1 | 1 | 0 | 0 | 0 | 0 | 0 | 0 | 0 |
| Director, Sales | 1 | 1 | 0 | 1 | 0 | 0 | 0 | 0 | 0 | 0 |
| VP Data Processing | 1 | 0 | 0 | 0 | 1 | 1 | 1 | 0 | 0 | 0 |
| Director, Operations | 1 | 0 | 0 | 0 | 1 | 1 | 0 | 0 | 0 | 0 |
| Director, Development | 1 | 0 | 0 | 0 | 1 | 0 | 1 | 0 | 0 | 0 |
| VP Business Affairs | 1 | 0 | 0 | 0 | 0 | 0 | 0 | 1 | 1 | 1 |
| Director, Human Resources | 1 | 0 | 0 | 0 | 0 | 0 | 0 | 1 | 1 | 0 |
| Director, Finance | 1 | 0 | 0 | 0 | 0 | 0 | 0 | 1 | 0 | 1 |

**FIG. 7B**

DATA_BASE_TABLE -- 120

| RRN | Position | Organization Chain Index |
|---|---|---|
| 0 | President | 1111111111 |
| 1 | UP Marketing | 0000001111 |
| 2 | Director, Sales | 0000000111 |
| 3 | Director, Marketing | 0000001011 |
| 4 | UP Data Processing | 0001110001 |
| 5 | Director, Operations | 0000110001 |
| 6 | Director, Development | 0001010001 |
| 7 | UP Business Affairs | 1110000001 |
| 8 | Director, Human Resources | 0110000001 |
| 9 | Director, Finance | 1010000001 |

FIG. 7C

EP 0 494 364 A2

Query: Select Position from = DATA_BASE_TABLE
Where Position = "Director, Sales";

1. Retrieve rows with Position = "Director, Sales"

DATA_BASE_TABLE -- 120

| RRN | Position | Organization Chain Index |
|---|---|---|
| 0 | President | 1111111111 |
| 1 | UP Marketing | 0000001111 |
| 2 | Director, Sales | 0000000111 |
| 3 | Director, Marketing | 0000001011 |
| 4 | UP Data Processing | 0001110001 |
| 5 | Director, Operations | 0000110001 |
| 6 | Director, Development | 0001010001 |
| 7 | UP Business Affairs | 1110000001 |
| 8 | Director, Human Resources | 0110000001 |
| 9 | Director, Finance | 1010000001 |

2. Convert XM (Organization Chain Index value) into list of RRNs:

RRN List: 0, 1, 2

3. Retrieve rows corresponding to RRN List values

4. Return retrieved records to requestor:

"President", "UP Marketing", "Director, Sales".

FIG. 7D